# EUROPÄISCHE PATENTANMELDUNG

(11) **EP 1 880 882 A2**
(43) Veröffentlichungstag der Anmeldung: **23.01.2008**
(21) Anmeldenummer: 07013933.2
(22) Anmeldetag: 17.07.2007
(51) Int. Cl.: B60J 1/18

(54) **Verfahren zur Herstellung einer Verklebung und Fahrzeugdach mit textilem Verdeckstoff sowie Fahrzeugkomponente mit textilem Stoff**

(30) Priorität: 19.07.2006 DE 102006033368
(71) Anmelder: Wilhelm Karmann GmbH, 49084 Osnabrück (DE)
(72) Erfinder: Schäfers, Christian Dr., 49477 Ibbenbüren (DE); Bleitner, Uwe, 49597 Rieste (DE)

(57) **Zusammenfassung**

Es wird ein Verfahren zur Herstellung einer Verklebung zwischen einem Bereich eines textilen Verdeckstoffes (2) eines Fahrzeugdaches (3) oder eines textilen Stoffes einer Fahrzeugkomponente mit einem weiteren Bereich des Verdeckstoffes (2) oder des textilen Stoffes und/oder mit wenigstens einem Bereich eines Bauteiles (6) des Fahrzeuges (1) mittels eines Klebstoffsystems, welches vor der Verklebung auf wenigstens einen der miteinander zu verklebenden Bereiche aufgebracht wird und zur Herstellung der Verklebung während eines sich an das Auftragen anschließenden Energieeintrages in das Klebstoffsystem aktiviert wird, beschrieben. Des Weiteren wird ein Fahrzeugdach (3) mit textilem Verdeckstoff oder eine Fahrzeugkomponente mit textilem Stoff vorgeschlagen, der mittels des vorgenannten Klebstoffsystems wenigstens bereichsweise mit sich selbst oder einem weiteren Bauteil des Fahrzeuges (1) verklebt ist. Ein erster Bestandteil (6) des Klebstoffsystems ist in einem nicht mit einem zweiten Bestandteil des Klebstoffsystems vernetzenden Zustand in dem zweiten Bestandteil verteilt angeordnet und wird während des Energieeintrages in einen mit dem zweiten Bestandteil vernetzenden Zustand überführt und vernetzt mit dem zweiten Bestandteil zur Herstellung der Verklebung.

## Beschreibung

Die Erfindung betrifft ein Verfahren zur Herstellung einer Verklebung zwischen einem Bereich eines textilen Verdeckstoffes eines Fahrzeugdaches oder eines textilen Stoffes mit einem weiteren Bereich des Verdeckstoffes oder des Stoffes und/oder mit wenigstens einem Bereich eines Bauteils des Fahrzeuges mittels eines Klebstoffsystems gemäß der im Oberbegriff des Patentanspruches 1 bzw. 2 näher definierten Art sowie ein Fahrzeugdach oder eine Fahrzeugkomponente mit textilem Verdeckstoff bzw. textilen Stoff, der mittels eines Klebstoffsystems wenigstens bereichsweise mit sich selbst und/oder einem weiteren Bauteil des Fahrzeuges verklebt ist, gemäß der im Oberbegriff des Patentanspruches 14 bzw. 20 näher definierten Art.

Aus der DE 39 11 613 C1 ist es bekannt, flächenhafte Gebilde, z. B. Folien, dünnwandige Tiefziehteile usw. mittels wärmeaktivierbarer Klebstoffe zu verbinden. Diese Arbeitsweise wird in der Automobilindustrie beispielsweise bei der Herstellung von Kraftfahrzeug-Innenausstattungen, wie bei der Folien- oder Stoffkaschierung von Türseitenverkleidungen, Armaturentafeln und dergleichen angewendet. Dabei wird eines der beiden zu verbindenden Teile mittels eines Sprühverfahrens oder mittels Walzen mit einem Lösungsmittelklebstoff oder Dispersionsklebstoff versehen, wobei der Klebstoff nach dem Ablüften des Lösungsmittels bzw. Wassers keine Klebefähigkeit mehr besitzt und erst zum Zeitpunkt der Verarbeitung durch Zuführen von Wärme wieder aktiviert wird und die dann zusammengefügten Teile miteinander verkleben kann. Zu diesem Zweck wird der Klebstoff auf Temperaturbereiche von mindestens 50°C bis 60°C erwärmt.

Derartige Klebstoffsysteme sind üblicherweise als sogenannte Zweikomponenten-Dispersionsklebstoffe ausgeführt, deren zwei wesentliche Komponenten vor der Verwendung als Klebstoff unter Berücksichtigung einer sogenannten Topfzeit miteinander zu vermischen sind und innerhalb der Topfzeit in der vorbeschriebenen Art und Weise auf eine zu verklebende Fläche aufzutragen sind. Dabei stellt eine erste Komponente üblicherweise ein Harz dar, welches mit der zweiten Komponente, einem sogenannten Härter, zunächst vermischt wird, wobei die beiden vermischten Komponenten anschließend aufgrund des Kontaktes miteinander reagieren und die Verklebung herstellen.

Dabei ist jedoch von Nachteil, dass zweikomponentige Dispersionsklebstoffe innerhalb der Topfzeit verarbeitet werden müssen und nach dem Auftragen innerhalb eines bestimmten Zeitraumes durch einen Wärmeeintrag aktiviert werden müssen, da nach Ablauf der Topfzeit ein Auftragen des Klebstoffsystems nicht mehr möglich ist und eine Wärmeaktivierung des Klebstoffsystems nach Ablauf des bestimmten Zeitraumes nicht mehr durchführbar ist.

Weitere für die vorbeschriebene Vorgehensweise geeignete Klebstoffsysteme stellen sogenannte reaktive Hotmelts dar, welche jedoch nachteilhafterweise durch eine lange Nachvernetzungszeit bei hoher Luftfeuchtigkeit gekennzeichnet sind, so dass eine Verklebung mit einem derartigen Klebstoffsystem unerwünscht lange Fertigungszeiten von Fahrzeugdächern verursacht.

Der vorliegenden Erfindung liegt daher die Aufgabe zugrunde, ein Verfahren zur Herstellung einer Verklebung zwischen einem Bereich eines textilen Verdeckstoffes eines Fahrzeugdaches oder eines textilen Stoffes mit einem weiteren Bereich des Verdeckstoffes oder des Stoffes und/oder mit wenigstens einem Bauteil eines Fahrzeuges mittels eines Klebstoffsystems sowie ein Fahrzeugdach mit textilem Verdeckstoff oder eine Fahrzeugkomponente mit textilem Stoff, der jeweils mittels eines Klebstoffsystems wenigstens bereichsweise mit sich selbst und/oder einem Bauteil des Fahrzeuges verklebt sind, zur Verfügung zu stellen, um ein Fahrzeugdach mit textilem Verdeckstoff oder eine Fahrzeugkomponente mit textilem Stoff einfach und kostengünstig herstellen zu können.

Erfindungsgemäß wird diese Aufgabe mit einem Verfahren gemäß den Merkmalen des Patentanspruches 1 bzw. 2 sowie mit einem Fahrzeugdach oder einer Fahrzeugkomponente gemäß den Merkmalen des Patentanspruches 14 bzw. 20 gelöst.

Bei den erfindungsgemäßen Verfahren zur Herstellung einer Verklebung zwischen einem Bereich eines textilen Verdeckstoffes eines Fahrzeugdaches oder eines textilen Stoffes mit einem weiteren Bereich des Verdeckstoffes oder des textilen Stoffes und/oder mit wenigstens einem Bereich eines Bauteiles des Fahrzeuges bzw. einem Fahrzeugelement mittels eines Klebstoffsystems wird das Klebstoffsystem vor der Verklebung auf wenigstens einen der miteinander zu verklebenden Bereiche aufgebracht und zur Herstellung der Verklebung während eines sich an das Auftragen anschließenden Energieeintrages in das Klebstoffsystem aktiviert.

Eine einfache und kostengünstige Herstellung eines Fahrzeugdaches mit einem textilen Verdeckstoff oder einer Fahrzeugkomponente wird dadurch erreicht, dass ein erster Bestandteil des Klebstoffsystems in einem nicht mit einem zweiten Bestandteil des Klebstoffsystems vernetzenden Zustand in dem zweiten Bestandteil verteilt angeordnet ist, der während des Energieeintrages in einen mit dem zweiten Bestandteil vernetzenden Zustand überführt wird und mit dem zweiten Bestandteil zur Herstellung der Verklebung vernetzt.

Diese erfindungsgemäße Vorgehensweise bietet in vorteilhafter Weise die Möglichkeit, das Klebstoffsystem vor dem Auftragen auf den Verdeckstoff oder auf den textilen Stoff und/oder auf das mit dem Verdeckstoff oder mit dem textilen Stoff zu verklebende Bauteil des Fahrzeuges bzw. Fahrzeugelement in einem für den Auftragvorgang erforderlichen Verarbeitungszustand für eine im Wesentlichen unbegrenzte Zeit, d. h. ohne Berücksichtigung einer Topfzeit, vorhalten zu können. Nach dem Auftragen des Klebstoffsystems sind der zu verklebende textile Verdeckstoff oder der textile Stoff und/oder das zu verklebende Bauteil des Fahrzeuges bzw. das Fahrzeugelement vor der Aktivierung des Klebstoffsystems wiederum für nahezu unbegrenzte Zeit lagerbar und beispielsweise erst bei der Endmontage eines Fahrzeuges in gewünschtem Umfang durch einen entsprechenden Energieeintrag in das zunächst nicht aktivierte Klebstoffsystem miteinander verklebbar.

Bei dem erfindungsgemäßen Fahrzeugdach mit textilem Verdeckstoff oder der Fahrzeugkomponente mit textilem Stoff, der mittels eines Klebstoffsystems wenigstens bereichsweise mit sich selbst und/oder einem Bauteil des Fahrzeuges bzw. einem Fahrzeugelement verklebt ist, wobei die Verklebung mittels eines Klebstoffsystems hergestellt ist, welches zumindest auf eine Fläche des Verdeckstoffes oder des textilen Stoffes und/oder des damit zu verbindenden Bauteiles des Fahrzeuges bzw. des Fahrelements vor dem Verkleben aufbringbar und zum Verkleben des Verdeckstoffes oder des textilen Stoffes mit sich selbst und/oder mit dem Bauteil des Fahrzeuges bzw. mit dem Fahrzeugelement durch Energiezufuhr aktivierbar ist, ist das Klebstoffsystem vor der energiezufuhrseitigen Aktivierung aus wenigstens einem ersten Bestandteil und einem zweiten Bestandteil gebildet, wobei der erste Bestandteil vor der Energiezufuhr in einem mit dem zweiten Bestandteil nicht vernetzenden Zustand in dem zweiten Bestandteil verteilt angeordnet ist, durch die Energiezufuhr in einen mit dem zweiten Bestandteil vernetzenden Zustand überführbar ist und in diesem zur Herstellung der Verklebung mit dem zweiten Bestandteil vernetzt.

Das erfindungsgemäße Fahrzeugdach oder die Fahrzeugkomponente nach der Erfindung ist im Vergleich zu herkömmlichen Fahrzeugdächern mit textilen Verdeckstoffen oder zu an sich bekannten Fahrzeugkomponenten mit textilen Stoffen einfacher und kostengünstiger herstellbar, da sowohl auf aufwändige Mischprozesse zum Herstellen eines Zwei-Komponenten-Dispersionsklebstoffsystems vor dem Auftragen des Klebstoffsystems auf den textilen Verdeckstoff oder den textilen Stoff und/oder auf das damit zu verklebende Bauteil des Fahrzeuges bzw. das Fahrzeugelement als auch auf aufwändige und zeitintensive Nachvernetzungsprozesse wie bei reaktiven Hotmelts verzichtet werden kann.

Weitere Vorteile und vorteilhafte Ausgestaltungen der Erfindung ergeben sich aus den Patentansprüchen und dem unter Bezugnahme auf die Zeichnung prinzipmäßig beschriebenen Ausführungsbeispiel.

Es zeigt:
- Fig. 1: ein stark schematisiertes Ablaufschema des erfindungsgemäßen Verfahrens;
- Fig. 2: eine starke schematisierte Darstellung eines Cabriolet-Fahrzeuges mit einem einen textilen Verdeckstoff aufweisenden Fahrzeugdach;
- Fig. 3: einen in Fig. 2 näher gekennzeichneten Bereich X in einer Schnittansicht entlang der Linie III - III; und
- Fig. 4: einen in Fig. 2 näher gekennzeichneten Bereich Y in einer Schnittansicht entlang der Linie IV - IV.

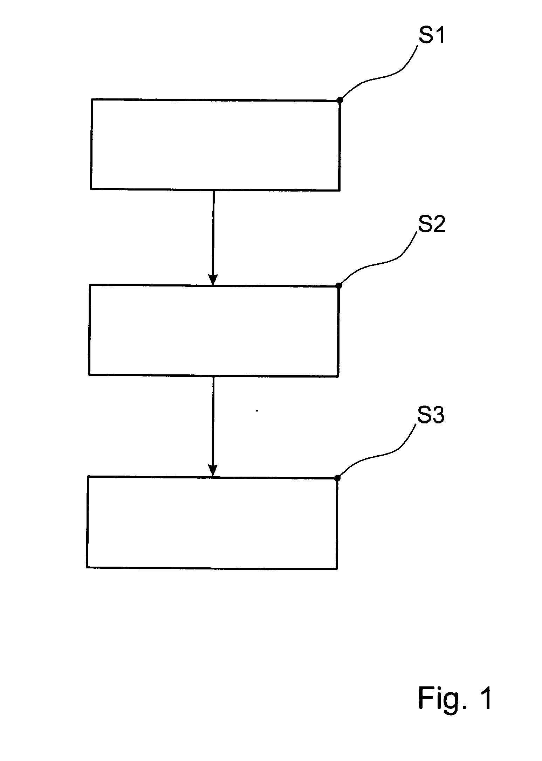

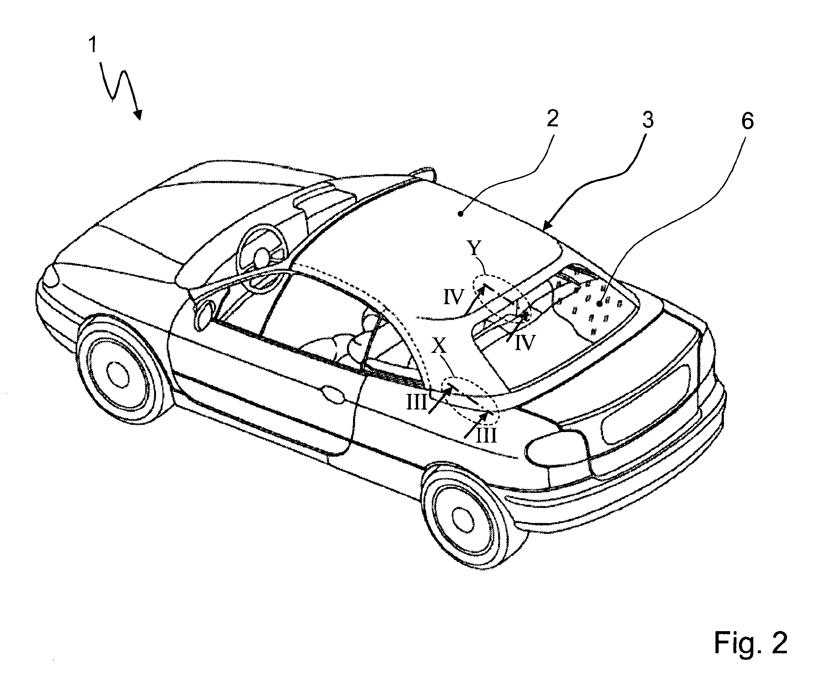

Fig. 1 zeigt ein stark schematisiertes Ablaufschema des erfindungsgemäßen Verfahrens zur Herstellung einer Verklebung zwischen einem Bereich eines in Fig. 2 näher dargestellten textilen Verdeckstoffes 2 eines Fahrzeugdaches 3 eines Cabriolet-Fahrzeuges 1 mit einem weiteren Bereich des Verdeckstoffes 2 und/oder mit wenigstens einem Bereich eines Bauteiles des Cabriolet-Fahrzeuges 1 mittels eines Klebstoffsystems, welches vor der verklebung auf wenigstens einen der miteinander zu verklebenden Bereiche aufgebracht wird und zur Herstellung der Verklebung während eines sich an das Auftragen anschließenden Energieeintrages aktiviert wird.

Während eines ersten Schrittes S1 wird das Klebstoffsystem durch Mischen eines ersten Bestandteiles des Klebstoffsystems und eines zweiten Bestandteiles des Klebstoffsystems hergestellt, wobei der erste Bestandteil des Klebstoffsystems nach dem Mischen in einem nicht mit dem zweiten Bestandteil des Klebstoffsystems vernetzenden Zustand in den zweiten Bestanteil verteilt angeordnet ist. In diesem vermischten Zustand der zwei Bestandteile des Klebstoffsystems ist das Klebstoffsystem im Wesentlichen für eine nahezu beliebige Zeit lagerbar, bevor das Klebstoffsystem auf einen Bereich des Verdeckstoffes 2 und/oder auf wenigstens einen Bereich eines mit dem Verdeckstoff zu verklebenden Bauteiles des Fahrzeuges 1 auftragbar ist.

Vorliegend handelt es sich bei dem verwendeten Klebstoffsystem um ein sogenanntes Ein-Komponenten-Dispersionsklebstoffsystem, dessen erster Bestandteil und dessen zweiter Bestandteil in einem Lösungsmittel angeordnet sind. Damit ist das Klebstoffsystem während eines Schrittes S2 mittels Sprühen, Walzen oder dergleichen auf einen Bereich des textilen Verdeckstoffes 2 und/oder auf einen Bereich des mit dem Verdeckstoff 2 zu verklebenden Bauteiles des Fahrzeugdaches 3 bzw. des Cabriolet-Fahrzeuges auftragbar. Anschließend ist das Lösungsmittel während eines Trocknungsschrittes ablüftbar. Als Lösungsmittel wird vorzugsweise Wasser verwendet, da dieses beim Ablüften keine besonderen Maßnahmen hinsichtlich der Absaugung eines umweltschädlichen Lösungsmittels erfordert.

Darüber hinaus sind auch andere geeignete Lösungsmittel einsetzbar, die in Abhängigkeit ihrer Umweltbelastung unter Umständen Maßnahmen zum Absaugen und Weiterverarbeiten erforderlich machen.

Nach der Trocknung des Klebstoffsystems ist das mit dem Klebstoffsystem benetzte Bauteil, d. h. der textile Verdeckstoff 2 und/oder das Bauteil des Fahrzeugdaches 3 nahezu unbegrenzt lagerfähig. Dadurch bietet sich die Möglichkeit, das Auftragen des Klebstoffsystems auf den textilen Verdeckstoff 2 und/oder das Bauteil des Fahrzeugdaches 3 von dem eigentlichen Verkleben des textilen Verdeckstoffes 2 mit sich selbst und/oder mit dem Bauteil des Fahrzeugdaches 3 bzw. des Cabriolet-Fahrzeuges 1 zu entkoppeln. So ist das Klebstoffsystem beispielsweise auf den textilen Verdeckstoff 2 auftragbar und erst zu einem späteren Zeitpunkt mit sich selbst oder mit einem Bauteil des Cabriolet-Fahrzeuges 1 verklebbar. Das für die verklebung benötigte Temperatur-Zeit-Fenster zur Aktivierung des ersten Bestandteiles des Klebstoffsystems bzw. der Vernetzerkomponente des Klebstoffsystems ist auf einfache Art und Weise an die jeweils zur Herstellung des Verdeckstoffes 2 verwendeten Textilien bzw. an das oder an die mit dem Verdeckstoff 2 zu verklebenden Bauteile des Cabriolet-Fahrzeuges 1 anpassbar.

Alternativ hierzu besteht auch die Möglichkeit, das Klebstoffsystem mit dem ersten Bestandteil und mit dem zweiten Bestandteil als Pulver auf den textilen Verdeckstoff 2 und/oder das mit dem textilen Verdeckstoff zu verklebende Bauteil des Cabriolet-Fahrzeuges oder auf die mit dem textilen Verdeckstoff zu verklebenden Bauteile des Cabriolet-Fahrzeuges durch Aufstäuben aufzutragen und die mit dem Klebstoffsystem versehenen und miteinander zu verklebenden Bereiche des textilen Verdeckstoffes 2 und/oder des Bauteiles oder der Bauteile des Cabriolet-Fahrzeuges wahlweise vor der Verklebung zwischen zu lagern oder sofort nach dem Auftragen des Klebstoffsystems durch einen entsprechenden Energieeintrag miteinander zu verkleben.

Zusätzlich alternativ zu den beiden vorbeschriebenen Vorgehensweisen zum Auftragen des Klebstoffsystems auf die miteinander zu verklebenden Bereiche besteht auch die Möglichkeit, ein in vorgenannter Art und Weise ausgebildetes Ein-Komponenten-Dispersionsklebstoffsystem auf ein separates Bauteil aufzutragen und anschließend das Lösungsmittel des EinKomponenten-Dispersionsklebstoffsystems abzulüften. Nach dem Ablüftvorgang wird das Klebstoffsystem von dem separaten Bauteil abgezogen und als Klebstofffolie zwischengelagert. Die derart hergestellte Klebstofffolie ist in Form und Dicke an die miteinander zu verklebenden Bereiche des textilen Verdeckstoffes 2 und/oder des Bauteiles oder der Bauteile des Cabriolet-Fahrzeuges angepasst herstellbar und wird zum Verkleben der Bauteile auf einfache Art und Weise zwischen die miteinander zu verklebenden Bereiche des Verdeckstoffes und/oder des Bauteiles oder der Bauteile des Fahrzeugdaches 3 eingelegt und anschließend durch entsprechenden Energieeintrag aktiviert.

In einem dritten Schritt S3 wird die eigentliche Verklebung des textilen Verdeckstoffes 2 des Fahrzeugdaches 3 mit sich selbst in Form eines Umbuges oder dergleichen und/oder mit einem Bauteil des Cabriolet-Fahrzeuges 1 durch einen entsprechenden Energieeintrag in das Klebstoffsystem, der beispielsweise durch Wärmeplatten oder hochfrequente Strahlung in das Klebstoffsystem einbringbar ist, hergestellt. Dazu werden die miteinander zu verklebenden Bereiche zunächst in Anlage gebracht.

Während des Energieeintrages wird der erste Bestandteil des Klebstoffsystems aus seinem nicht mit dem zweiten Bestandteil des Klebstoffsystems vernetzenden Zustand in einen mit dem zweiten Bestandteil vernetzenden Zustand überführt und vernetzt mit dem zweiten Bestandteil, wodurch der textile Verdeckstoff 2 mit sich selbst und/oder mit einem Bauteil des Fahrzeugdaches 3 verklebt wird.

Der erste Bestandteil des Klebstoffsystems stellt vorliegend einen sogenannten latenten Härter dar, der in dem zweiten Bestandteil, der vorzugsweise ein Harz ist, vor dem Energieeintrag in gekapselter Form verteilt angeordnet ist und somit nicht mit dem zweiten Bestandteil des Klebstoffsystems vernetzt. Erst durch den Energieeintrag wird die Kapselung des ersten Bestandteiles gegenüber dem zweiten Bestandteil des Klebstoffsystems überwunden, so dass der erste Bestandteil mit dem zweiten Bestandteil vernetzt und die Verklebung zwischen den miteinander zu verbindenden Bereichen des textilen Verdeckstoffes 2 und/oder zwischen Bereichen des Verdeckstoffes 2 und einem Bauteil des Cabriolet-Fahrzeuges 1 hergestellt wird.

Vorliegend wird als Ein-Komponenten-Dispersionsklebstoffsystem ein polyurethanbasierendes Klebstoffsystem mit einem als reaktives Isocyanat ausgeführten latenten Härter in wässriger oder lösungsmittelhaltiger Basis für die Verklebung von Softtoptextilien, wie einer Umbugverklebung sowie einer Verklebung zwischen einem textilen Verdeckstoff und einem Bauteil des Cabriolet-Fahrzeuges 1 verwendet.

Hiervon abweichend besteht auch die Möglichkeit, dass der zweite Bestandteil des Klebstoffsystems ein Epoxydharz oder eine Acrylatverbindung ist, in welchem ein vor dem Energieeintrag nicht vernetzender erster Bestandteil verteilt angeordnet ist und durch einen entsprechenden Energieeintrag in einen mit dem zweiten Bestandteil vernetzenden Zustand überführt wird, wodurch eine entsprechende Verklebung des textilen Verdeckstoffes mit sich selbst und/oder mit einem Bauteil eines Cabriolet-Fahrzeuges herstellbar ist.

Das Klebstoffsystem bzw. der erste Bestandteil des Klebstoffsystems wird mit in Abhängigkeit des jeweils verwendeten Klebstoffsystems, der Materialeigenschaften des textilen Verdeckstoffes und/oder des mit dem textilen Verdeckstoff zu verklebenden Bauteiles des Cabriolet-Fahrzeuges variierenden Energieeinträgen aktiviert.

Mit dem vorbeschriebenen erfindungsgemäßen Verfahren und der Verwendung der vorgenannten Klebstoffsysteme, die gute Wärmebeständigkeiten aufweisen und in Wasser nicht quellbar sind, sind Fahrzeugdächer mit textilen Verdeckstoffen innerhalb kurzer Zeit auf einfache und kostengünstige Art und Weise mittels Verkleben herstellbar und mit im Vergleich zu aus dem Stand der Technik bekannten Fahrzeugdächern reduzierten Prozesszeiten herstellbar.

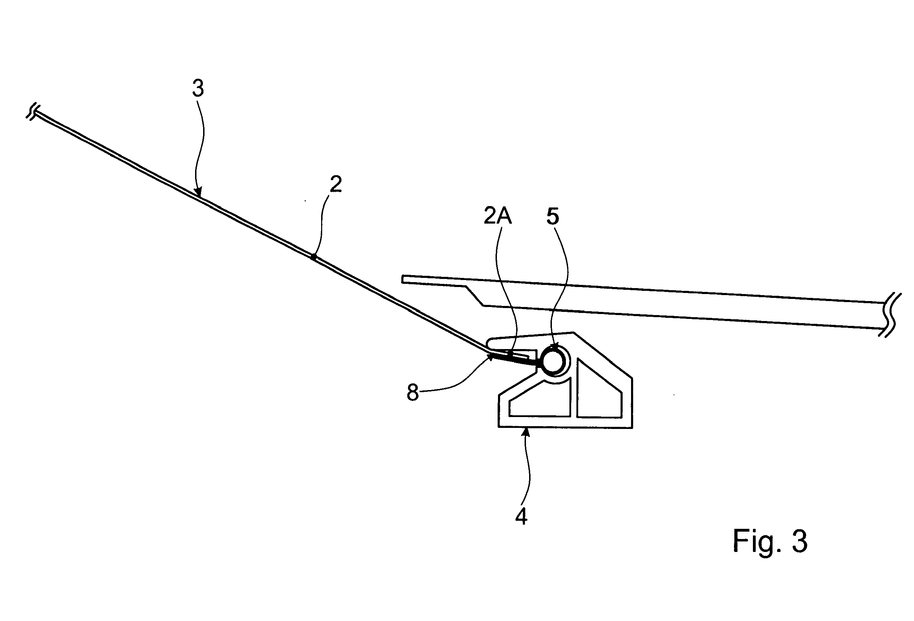

Fig. 3 zeigt einen in Fig. 2 näher gekennzeichneten Bereich X in einer vergrößerten Einzelschnittansicht entlang der Linie III-III. Dabei ist der textile Verdeckstoff 2 des Fahrzeugdaches 3 in einem Randbereich 2A mit einem wenigstens bereichsweise eben ausgeführten Bauteil 5 eines Verdeckspannbügels 4 über ein in vorbeschriebener Art und Weise auf den Randbereich 2A des textilen Verdeckstoffes 2 aufgebrachtes Klebstoffsystem 8 fest verklebt, wobei der Randbereich 2A mit dem Klebstoffsystem 8 zur Herstellung der Verklebung mit dem Bauteil 5 in Überdeckung und Anlage gebracht worden ist und das Klebstoffsystem 8 anschließend durch den Energieeintrag aktiviert worden ist.

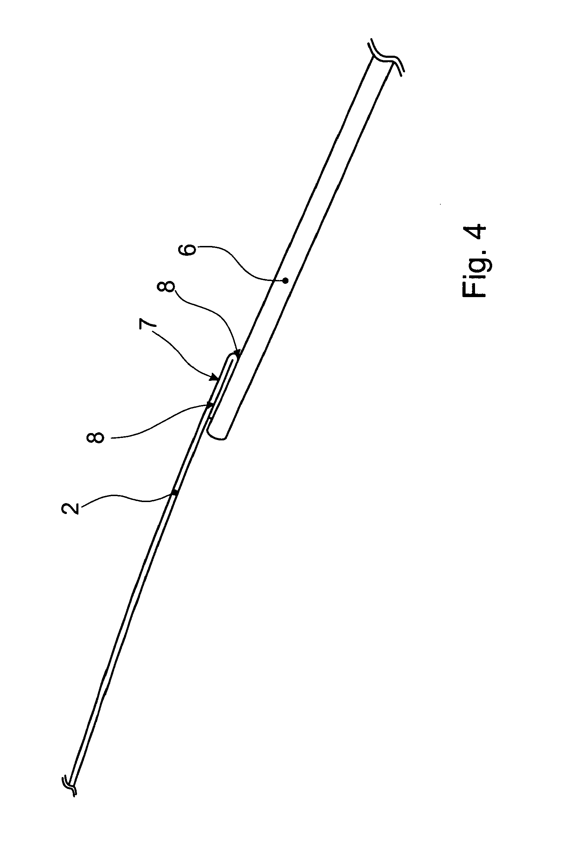

Des Weiteren zeigt Fig. 4 einen in Fig. 2 näher gekennzeichneten Bereich Y in einer vergrößerten Einzelschnittansicht entlang der Linie IV-IV, in der der textile Verdeckstoff 2 mit einer vorzugsweise aus Glas oder durchsichtigem Kunststoff hergestellten Heckscheibe 6 des Fahrzeugdaches 3 über ein in vorbeschriebener Art und Weise ausgeführtes Klebstoffsystem 8 auf erfindungsgemäße Art und Weise verklebt ist. Neben der Verklebung des textilen Verdeckstoffes 2 mit der Heckscheibe 6 ist der textile Verdeckstoff 2 in einem Umbugbereich 7 zusätzlich ebenfalls über das Klebstoffsystem 8 mit sich selbst verklebt. Damit ist eine Schnittkante des textilen Verdeckstoffes 2 gegenüber Umwelteinflüssen abgeschirmt. Zusätzlich ist durch das Umschlagen des Verdeckstoffes 2 auch eine gerade Abschlusskante des Verdeckstoffes 2 gegenüber der Heckscheibe 6 auf einfache Art und Weise hergestellt.

Abweichend oder zusätzlich zu den in Fig. 3 und Fig. 4 gezeigten Beispielen einer Verklebung des textilen Verdeckstoffes 2 mit der Heckscheibe 6 des Fahrzeugdaches 3 beziehungsweise mit dem Verdeckspannbügel 4 ist der textile Verdeckstoff 2 auch in weiteren Bereichen mit sich selbst und/oder mit weiteren Bauteilen, wie Querspriegel oder dergleichen, des Fahrzeugdaches 3 in geeigneter Art und Weise verklebbar, um den Verdeckstoff bei geschlossenem Fahrzeugdach in gewünschtem Umfang abzustützen.

Darüber hinaus besteht auch die Möglichkeit, einen textilen Verdeckstoff eines Fahrzeugdaches eines Fahrzeuges großflächig mit einem aus Metall oder Kunststoff hergestellten Fahrzeugdach in vorbeschriebener Art und Weise zu verkleben, um einem Fahrzeug einen besonderen ästhetischen Gesamteindruck zu verleihen. Dabei kann ein Fahrzeug mit einem Retractable Hardtop, einem Softtop oder mit einem sogenannten Targa-Dach ausgeführt sein.

Zudem ist mittels der vorbeschriebenen Vorgehensweise anstatt der Verklebung eines textilen Verdeckstoffes auch eine Verklebung zwischen einem Bereich eines textilen Stoffes eines Fahrzeuges mit einem weiteren Bereich des Stoffes und/oder mit wenigstens einem Bereich eines Bauteils des Fahrzeuges durch ein vorzugsweise als wärmeaktivierbarer Klebstoff ausgeführtes Klebstoffsystem, dass beispielsweise eine Polyurethan-Dispersion mit latenten Härter ist, herstellbar. Dabei wird das Klebstoffsystem vor der Verklebung auf wenigstens einen der miteinander zu verklebenden Bereiche aufgebracht und zur Herstellung der Verklebung während eines sich an das Auftragen anschließenden Energieeintrages in das Klebstoffsystem aktiviert.

Vorliegend werden unter dem Begriff textiler Stoff sowohl miteinander verwirkte Fasern als auch gewebte Stoffe oder auch Gewirke bzw. Wirkwaren verstanden, welche im Fahrzeugbereich zur Herstellung von Fahrzeugkomponenten, wie Seitenverkleidungsteile, Türen, Bespannungen von Fahrzeugsitzen, Verdeckstoffe, Dämmstoffe, Stoffe für Verdeckhimmel oder anderen Gewirken verwendet werden.

Dabei werden die zu verklebenden textilen Stoffe in Anhängigkeit des jeweils vorliegenden Anwendungsfalles jeweils lediglich bereichsweise oder vollflächig mit einem speziellen, wärmeaktivierbaren Klebstoff beschichtet, um diese mit sich selbst und/oder mit Fahrzeugelementen eines Fahrzeuges verkleben zu können, wobei das Klebstoffsystem bereits beim Hersteller des textilen Stoffes oder einem weiteren Herstellungsbetrieb, wie einem Unterlieferanten, bereits vor dem eigentlichen Klebeprozess auf einem textilen Stoff aufbringbar ist und als Halbfertigware im Produktionsbereich bevorratet werden kann.

Somit ist der Teilprozess, während dem der Klebstoff auf den textilen Stoff aufgetragen wird und der sich wiederum daran anschließende Ablüftprozess vom eigentlichen Montageprozess des Fahrzeuges losgelöst. Der Montageprozess eines Fahrzeugs ist ohne den apparativ aufwendigen Beschichtungsprozess des textilen Stoffes mit Klebstoff wesentlich vereinfacht, da während des Beschichtungsprozesses flüssiger Klebstoff oder Klebstofffolien auf dem textilen Stoff in definierter Art und Weise aufzubringen ist. Grundsätzlich werden die Produktionsabläufe durch die getrennten Abläufe auf einfache Art und Weise schlanker.

Ein flüssiges Klebstoffsystem wird mittels eines Walz-, Pinsel- oder Sprühauftrages auf den textilen Stoff bzw. den textilen Verdeckstoff aufgebracht. Anschließend werden die mit dem Klebstoffsystem beschichteten Bereiche des textilen Stoffes bzw. des textilen Verdeckstoffes einem Ablüftprozess unterzogen und später während eines Montageprozesses mittels eines Kontaktverfahrens im gewünschten Umfang verklebt, wobei in Einzelfällen eine so genannte Schweißfolie zum Einsatz kommt .

Werden textile Stoffe oder textile Verdeckstoffe während dem Montageprozess vorgelagerten Beschichtungsverfahren vollflächig mit einem Klebstoffsystems beschichtet, ist der textile Stoff oder der textile Verdeckstoff beispielsweise als so genannte Rollenware direkt beim Hersteller bzw. bei einem Unterlieferanten mit höherer Prozesssicherheit als im eigentlichen Montageprozess eines Fahrzeuges herstellbar. Ein vollflächig beschichteter textiler Stoff bzw. ein vollflächig beschichteter textiler Verdeckstoff ist durch entsprechendes Zuschneiden bzw. Zustanzen in jeder gewünschten Form zur Verfügung stellbar, die auch in Randbereichen vollständig mit Klebstoff benetzt ist.

Um den mit einem wärmeaktivierbaren Klebstoffsystem beschichteten textilen Stoff bzw. textilen Verdeckstoff während des eigentlichen Montageprozesses im gewünschten Umfang verkleben zu können, ist eine kostengünstige Heizpresse einsetzbar, wobei der Klebstofffilm nach einem Abkühlen des Klebstoffsystems vollständig vernetzt ist und eine die Fertigungszeiten in unerwünschtem Umfang verlängernde Klimalagerung nicht mehr erforderlich ist.

Die vorgeschlagenen erfindungsgemäßen Vorgehensweisen zur Herstellung großflächiger Verklebungen von textilen Stoffen oder textilen Verdeckstoffen bieten beispielsweise die Möglichkeit, akustische oder funktionale Dopplungen von Fahrzeugverdecken auf einfache und kostengünstige Art und Weise herzustellen.

Darüber hinaus werden mittels den vorbeschriebenen erfindungsgemäßen Vorgehensweise sowohl ein häufiges Handling der Werkstoffe als auch Prozessschwankungen während des Klebstoffauftrages vermieden. Zusätzlich entfallen während des Montageprozesses eines Fahrzeuges prozessbedingte Wartezeiten, die durch das Ablüften des Klebstoffes entstehen.

Auch wird ein klebstoffbedingtes maximales Zeitfenster für die Verarbeitung eines mit einem Klebstoffsystem benetzten textilen Stoffes bzw. textilen Verdeckstoffes nach dem Klebstoffauftrag von üblicherweise acht Stunden auf wenigstens sechs Monate vergrößert, wobei mit einem Klebstoffsystem, das als Polyurethan-Dispersion mit latentem Härter ausgebildet ist, im Vergleich zu Schweißfolien eine bessere Klebeverbindung erreicht wird, da beim über Schweißfolien verklebten Systemen aufgrund der fehlenden chemischen Vernetzung eine hohe Anfälligkeit der Verklebung bei großer Wärmeeinwirkung im Gebrauchsfall vorliegt.

## Patentansprüche

1. Verfahren zur Herstellung einer Verklebung zwischen einem Bereich (2A) eines textilen Verdeckstoffes (2) eines Fahrzeugdaches (3) mit einem weiteren Bereich des Verdeckstoffes (2) und/oder mit wenigstens einem Bereich eines Bauteils (4; 6) des Fahrzeuges (1) mittels eines Klebstoffsystems (8), welches vor der Verklebung auf wenigstens einen der miteinander zu verklebenden Bereiche (2A; 4; 6) aufgebracht wird und zur Herstellung der Verklebung während eines sich an das Auftragen anschließenden Energieeintrages in das Klebstoffsystem (8) aktiviert wird,
**dadurch gekennzeichnet,**
**dass** ein erster Bestandteil des Klebstoffsystems in einem nicht mit einem zweiten Bestandteil des Klebstoffsystems (8) vernetzenden Zustand in dem zweiten Bestandteil verteilt angeordnet ist und während des Energieeintrages in das Klebstoffsystem (8) in einen mit dem zweiten Bestandteil vernetzenden Zustand überführt wird und mit dem zweiten Bestandteil zur Herstellung der Verklebung vernetzt.

2. Verfahren zur Herstellung einer Verklebung zwischen einem Bereich (2A) eines textilen Stoffes (2) eines Fahrzeuges (1) mit einem weiteren Bereich des Stoffes (2) und/oder mit wenigstens einem Bereich eines Bauteils (4; 6) des Fahrzeuges (1) mittels eines Klebstoffsystems (8), welches vor der Verklebung auf wenigstens einen der miteinander zu verklebenden Bereiche aufgebracht wird und zur Herstellung der Verklebung während eines sich an das Auftragen anschließenden Energieeintrages in das Klebstoffsystem (8) aktiviert wird,
**dadurch gekennzeichnet,**
**dass** ein erster Bestandteil des Klebstoffsystems (8) in einem nicht mit einem zweiten Bestandteil des Klebstoffsystems (8) vernetzenden Zustand in dem zweiten Bestandteil verteilt angeordnet ist und während des Energieeintrages in das Klebstoffsystem (8) in einem mit dem zweiten Bestandteil vernetzenden Zustand zugeführt wird und mit dem zweiten Bestandteil zur Herstellung der Verklebung vernetzt.

3. Verfahren nach Anspruch 1 oder 2,
**dadurch gekennzeichnet,**
**dass** das Klebstoffsystem (8) auf den textilen Verdeckstoff (2) oder den textilen Stoff vollflächig aufgetragen wird.

4. Verfahren nach einem der Ansprüche 1 bis 3,
**dadurch gekennzeichnet,**
**dass** das Klebstoffsystem (8) als Ein-Komponenten-Dispersionsklebstoffsystem ausgebildet ist, bei welchem die beiden Bestandteile in einem Lösungsmittel angeordnet sind.

5. Verfahren nach Anspruch 4,
**dadurch gekennzeichnet,**
**dass** das Lösungsmittel nach dem Auftragen des Klebstoffsystems (8) auf einen Bereich (2A) des Verdeckstoffs (2) oder des textilen Stoffes und/oder des mit dem textilen Verdeckstoff (2) oder des textilen Stoffes über die Verklebung zu verbindenden Bauteile (4; 6) des Fahrzeuges (1) während eines dem Energieeintrag vorzugsweise vorgeschalteten Trocknungsschrittes abgelüftet wird.

6. Verfahren nach Anspruch 4,
**dadurch gekennzeichnet,**
**dass** das Lösungsmittel nach dem Auftragen des Klebstoffsystems (8) auf einen Bereich des Verdeckstoffes (2) oder des textilen Stoffes und/oder ein Bauteil des Fahrzeuges während eines Trocknungsschrittes abgelüftet wird, anschließend als Klebefolie von dem Bauteil abgenommen und vor der energieeintragsseitigen Aktivierung zwischen den miteinander zu verbindenden Bereichen des Verdeckstoffes oder des textilen Stoffes oder des Verdeckstoffes oder des textilen Stoffes und dem Bauteil des Fahrzeugdaches angeordnet wird.

7. Verfahren nach einem der Ansprüche 1 bis 6,
**dadurch gekennzeichnet,**
**dass** die Verklebung während eines vordefinierten Temperatur-Zeit-Profiles, während dem dem Klebstoffsystem (8) die für die Aktivierung des Klebstoffsystems erforderliche Energie zugeführt wird, hergestellt wird.

8. Verfahren nach einem der Ansprüche 1 bis 7,
**dadurch gekennzeichnet,**
**dass** das Klebstoffsystem (8) jeweils mit in Abhängigkeit der Materialeigenschaften des textilen Verdeckstoffes (2) oder des textilen Stoffes und/oder des damit zu verbindenden Bauteiles des Fahrzeuges (1) variierenden Energieeinträgen aktiviert wird.

9. Verfahren nach einem der Ansprüche 1 bis 8,
**dadurch gekennzeichnet,**
**dass** der zweite Bestandteil des Klebstoffsystems (8) auf Polyurethanbasis ausgeführt ist und der erste Bestandteil des Klebstoffsystems (8) ein aus reaktivem Isocyanat hergestellter latenter Härter ist.

10. Verfahren nach einem der Ansprüche 4 bis 9,
**dadurch gekennzeichnet,**
**dass** als Lösungsmittel Wasser vorgesehen ist.

11. Verfahren nach einem der Ansprüche 1 bis 10,
**dadurch gekennzeichnet,**
**dass** der textile Verdeckstoff (2) und/oder der textile Stoff mit einer Heckscheibe (6) des Fahrzeugdaches (3), die vorzugsweise aus Kunststoff oder Glas gebildet ist, verklebt wird.

12. Verfahren nach einem der Ansprüche 1 bis 11,
**dadurch gekennzeichnet,**
**dass** der textile Stoff (2) nach dem Auftragen des Klebstoffsystems (8) zugeschnitten wird.

13. Verfahren nach einem der Ansprüche 1 bis 12,
**dadurch gekennzeichnet,**
**dass** der textile Verdeckstoff (2) oder der textile Stoff wenigstens bereichsweise als Gewebe und/oder als Gewirk ausgeführt ist.

14. Fahrzeugdach (3) mit textilem Verdeckstoff (2), der mittels eines Klebstoffsystems (8) wenigstens bereichsweise mit sich selbst oder einem weiteren Bauteil (4; 6) des Fahrzeuges (1) verklebt ist, welches zumindest auf eine Fläche des Verdeckstoffes (2) oder des damit zu verbindenden Bauteiles (4; 6) des Fahrzeuges vor dem Verkleben aufbringbar und zum Verkleben des Verdeckstoffes (2) mit sich selbst und/oder mit dem Bauteil (4; 6) des Fahrzeuges (1) durch Energiezufuhr aktivierbar ist,
**dadurch gekennzeichnet,**
**dass** das Klebstoffsystem (8) vor der energiezufuhrseitigen Aktivierung aus wenigstens einem ersten Bestandteil und einem zweiten Bestandteil gebildet ist, wobei der erste Bestandteil vor der Energiezufuhr in einem mit dem zweiten Bestandteil nicht vernetzenden zustand in dem zweiten Bestandteil verteilt angeordnet ist, durch die Energiezufuhr in einen mit dem zweiten Bestandteil vernetzenden Zustand überführbar ist und in diesem zur Herstellung der Verklebung mit dem zweiten Bestandteil vernetzt.

15. Fahrzeugdach nach Anspruch 14, **dadurch gekennzeichnet,**
**dass** der zweite Bestandteil des Klebstoffsystems (8) auf Polyurethan basiert und der erste Bestandteil ein aus reaktivem Isocyanat hergestellter latenter Härter ist.

16. Fahrzeugdach nach Anspruch 14,
**dadurch gekennzeichnet,**
**dass** der zweite Bestandteil des Klebstoffsystems aus Epoxidharz gebildet ist.

17. Fahrzeugdach nach Anspruch 14,
**dadurch gekennzeichnet,**
**dass** der zweite Bestandteil des Klebstoffsystems aus wenigstens einer Acrylatverbindung hergestellt ist.

18. Fahrzeugdach nach einem der Ansprüche 14 bis 17,
**dadurch gekennzeichnet,**
**dass** das Klebstoffsystem (8) als Ein-Komponenten-Dispersionsklebstoffsystem ausgebildet ist, bei welchem die beiden Bestandteile in einem Lösungsmittel angeordnet sind.

19. Fahrzeugdach nach Anspruch 18,
**dadurch gekennzeichnet,**
**dass** als Lösungsmittel Wasser vorgesehen ist.

20. Fahrzeugkomponente mit textilem Stoff, der mittels eines Klebstoffsystems wenigstens bereichsweise mit sich selbst und/oder einem Fahrzeugelement verklebt ist, welches zumindest auf eine Fläche des textilen Stoffes oder des damit zu verbindenden Fahrzeugelementes vor dem Verkleben aufbringbar und zum Verkleben des textilen Stoffes mit sich selbst und/oder dem Fahrzeugelement durch Energiezufuhr aktivierbar ist,
**dadurch gekennzeichnet,**
**dass** das Klebstoffsystem (8) vor der energiezufuhrseitigen Aktivierung aus wenigstens einem ersten Bestandteil und einem zweiten Bestandteil gebildet ist, wobei der erste Bestandteil vor der Energiezufuhr in einem mit dem zweiten Bestandteil nicht vernetzenden Zustand in dem zweiten Bestandteil verteilt angeordnet ist, durch die Energiezufuhr in einem mit dem zweiten Bestandteil vernetzenden Zustand überführbar ist und in diesem zur Herstellung der Verklebung mit dem zweiten Bestandteil vernetzt.

21. Fahrzeugkomponente nach Anspruch 20,
**dadurch gekennzeichnet,**
**dass** der zweite Bestandteil des Klebstoffsystems (8) auf Polyurethanbasis ausgeführt ist und der erste Bestandteil ein aus reaktivem Isocyanat hergestellter latenter Härter ist.

22. Fahrzeugkomponente nach Anspruch 20,
**dadurch gekennzeichnet,**
**dass** der zweite Bestandteil des Klebstoffsystems aus Epoxidharz gebildet ist.

23. Fahrzeugkomponente nach Anspruch 20,
**dadurch gekennzeichnet,**
**dass** der zweite Bestandteil des Klebstoffsystems aus wenigstens einer Acrylatverbindung hergestellt ist.

24. Fahrzeugkomponente nach einem der Ansprüche 20 bis 23,
**dadurch gekennzeichnet,**
**dass** das Klebstoffsystem (8) als Ein-Komponenten-Dispersionsklebstoffsystem ausgebildet ist, bei welchem die beiden Bestandteile in einem Lösungsmittel angeordnet sind.

25. Fahrzeugkomponente nach Anspruch 24,
**dadurch gekennzeichnet,**
**dass** als Lösungsmittel Wasser vorgesehen ist.
